# EUROPEAN PATENT APPLICATION

(11) **EP 1 315 088 A2**
(43) Date of publication of application: **28.05.2003**
(21) Application number: 02023050.4
(22) Date of filing: 16.10.2002
(51) Int. Cl.: G06F 9/46

(54) **System for installing and launching network applications**

(30) Priority: 18.10.2001 US 45188
(71) Applicant: SEIKO EPSON CORPORATION, Tokyo 163 (JP)
(72) Inventor: Li, Chia-Hsin, San Jose, California 95129 (US); Nelson, Steve, San Jose, California 95139 (US); Huffmire, Theodore, San Francisco, California 95114 (US); Miceli, Sean, Sunnyvale, California 94086 (US); Chan, Brian, Palo Alto, California 94306 (US)
(74) Representative: Grünecker, Kinkeldey, Stockmair & Schwanhäusser Anwaltssozietät

(57) **Abstract**

Methods and a system for installing and launching network application in a manner where the applications are regulated to run uniformly across platforms are provided. One exemplary method includes installing and launching a network application, through a distributed network where the application is contained on a server. The method initiates with accessing the server through the network. Then, parameters of the application are selected. Next, it is determined if the latest version of the application is present on a client. Then, an archive file containing the latest version of the application is downloaded and installed if the latest version of the application is not present on the client. Next, the application is launched. Then, parameters are passed to a port. The port is in communication with the application and the application is configured to access native libraries of the archive file.

## Description

### BACKGROUND OF THE INVENTION

### 1. Field of the Invention

This invention relates generally to methods and a system for running network applications and more particularly for running network applications as Java applications.

### 2. Description of the Related Art

There are many browsers available to navigate the world wide web. Each of the browsers employ different methods for displaying Java applets. As is well known in the art, Java applets are programs sent along with a web page to a user that enable a user to perform tasks through the program without having to send a user request back to a server. The interface between the web browser and the Java applet is handled differently for each of the different browsers, not to mention that the Java Virtual Machine (JVM) for each browser also processes operations differently. Additionally, by running the applet in the browser limitations are imposed on what can be done with the applet. For example, when running the applet in the browser there are security restrictions placed on the applet. Furthermore, an applet cannot access the native functionality of the system, i.e., platform, on which the applet is being run.

There are additional problems with running a Java applet through the browser. First of all, different browsers use different versions of the Java Virtual Machine. The same Java byte codes may behave differently depending on the JVM on which they are being executed. For example, Microsoft's Internet Explorer™ uses a completely different virtual machine from Netscape™ even though both are run in the Windows™ environment. This is also true when different browsers are run under the Macintosh™ platform or other operating systems (OS). In addition, the interface between the Java Virtual Machine and the web browser can have design deficiencies that can cause noticeable miscommunication between the Java Virtual Machine and the web browser. These communication failures can range from missing user input from the mouse and keyboard to ignoring the browser's security settings.

Furthermore, different web browsers have different security systems for "trusting" Java applets. Moreover, it is impossible with some web browsers for Java applets to access native methods. In addition, running a Java applet inside a web browser for some time can cause memory leaks, where the memory requested by the applet is never given back to the system. Another peril is that sometimes the behavior of Java code that is running inside the web browser is altered such that it is different than when the same Java code runs on the same virtual machine outside the browser. In addition, some web browsers have poorly configured virtual machines. In such a case, it is almost impossible to write any kind of network program that would have any chance of doing something useful with such an unfavorable virtual machine.

Yet a further concern is that since the applet is running through the browser, any bugs present in the browser will necessarily affect the applet. Similarly, any bugs inside the applet will affect the browser in this situation. In addition, when running an applet in a browser where the applet is performing sensitive operations, such as reading files, the applet must be digitally signed. A Java applet is clearly limited when connecting to other computers over networks since contacting other servers may cause conflicts with the user's privacy. Furthermore, it may cause undesired security problems such as a password being exposed, personal financial data being sent, etc.

As a result, there is a need to solve the problems of the prior art to provide a method for installing and launching an application which is standardized across platforms and released from the restrictions imposed by a resident browser.

### SUMMARY OF THE INVENTION

Broadly speaking, the present invention fills these needs by providing a method and system ensuring that network applications are consistently run across platforms and that the applications are run independent from the browser. It should be appreciated that the present invention can be implemented in numerous ways, including as a process, a system, or a device. Several inventive embodiments of the present invention are described below.

In one embodiment a method for installing and launching a network application, through a distributed network is provided where the application is contained on a server. The method initiates with accessing the server through the network. Then, parameters of the application are selected. Next, it is determined if the latest version of the application is present on a client. Then, an archive file containing the latest version of the application is downloaded and installed if the latest version of the application is not present on the client. Next, the application is launched. Then, parameters are passed to a port. The port is in communication with the application and the application is configured to access native libraries of the archive file.

In another embodiment, a method for running a network program on a client is provided. The network program is accessed through a web browser. The method initiates with accessing the server containing the network program. Then, the parameters of the application are configured. Next, a link is made to a page on the server. The page on the server contains version information of a server archive file. Then, it is determined if a client archive file is present on the client. The determining further includes inspecting the client archive file, if the client archive file is present, to ascertain if the client archive file is the same version as the server archive file. The determining also includes downloading the server archive file to the client if the client archive file is not present or if the client archive file is not the same version as the server archive file. Next, the program is launched.

In yet another embodiment, a system for installing and launching an application through a network is provided. The system includes a server. The server includes an application contained in a server archive file where the application includes a plurality of options. The server is configured to link to a page containing version information of the server archive file and to allow a user to select the options of the application. A web browser is included. Also included is a client in communication with the server through the web browser. The client is inspected by the server to determine if a client archive file is present and current. The version information of the server archive file is compared with version information of the client archive file, wherein if the client archive file is not present or not current, the server archive file is downloaded to the client. The client archive file includes the application. The application is configured to listen to a port such that any of the options selected by a user are transmitted to the application by a control module through the port.

In still yet another embodiment, a computer readable media containing program instructions for installing and launching a network application through a distributed network is provided. The application is contained on a server. The computer readable media includes program instructions for accessing the server through the network and program instructions for selecting parameters of the application. Program instructions for determining if the latest version of the application is present on a client are also included. Program instructions for downloading and installing an archive file containing the latest version of the application if the latest version of the application is not present on the client are included. Program instructions for launching the application and program instructions for passing parameters to a port are included. The port is in communication with the application and the application is configured to access native libraries of the archive file.

The advantages of the present invention are numerous. Most notably, the limitations imposed by running an applet in a browser are eliminated by running a stand alone Java application. In addition the application is capable of running independent of the browser, that is, the browser can be closed and the application can still run. Just as important is the standardization of the output of the Java application, enabled by utilizing the Java virtual machine of the operating system of the client and the native libraries installed by an archive file downloaded to the client. Thus, there is no longer a need to depend on Java libraries of the resident browser, which will change from computer to computer.

Other aspects and advantages of the invention will become apparent from the following detailed description, taken in conjunction with the accompanying drawings, illustrating by way of example the principles of the invention.

### BRIEF DESCRIPTION OF THE DRAWINGS

The present invention will be readily understood by the following detailed description in conjunction with the accompanying drawings, and like reference numerals designate like structural elements.

Figure 1 illustrates a flowchart displaying an overview of the method for installing and launching a network application in accordance with one embodiment of the invention.

Figure 2 illustrates a flowchart displaying a more detailed description of a method for running a network program on a client as a stand alone application in accordance with one embodiment of the invention.

Figure 3A illustrates a diagram illustrating an example of an object in an HTML page in accordance with one embodiment of the invention.

Figure 3B illustrates an exemplary diagram of the contents of a .cab file in accordance with one embodiment of the invention.

Figure 4 illustrates a flowchart representing a method for launching and installing a networked application where the application is geared toward editing an image in accordance with one embodiment of the invention.

### DETAILED DESCRIPTION OF THE PREFERRED EMBODIMENTS

An invention is described for an apparatus and system to install and launch network accessed programs as Java applications rather than Java applets. It will be obvious, however, to one skilled in the art, that the present invention may be practiced without some or all of these specific details. In other instances, well known process operations have not been described in detail in order not to unnecessarily obscure the present invention.

The embodiments of the present invention provide for a system and method for installing and launching network applications so that the applications are uniformly run across platforms and any output from the applications is likewise uniform across platforms no matter what browser is locally installed. In one embodiment, the network programs are run as Java applications rather than Java applets. Since the application is running as a stand alone application which is launched by a web browser but is not run within a web browser, there are no security restrictions placed on the behavior of the executing application. Additionally, the applications can uniformly access native methods and it is easier to support a greater number of web browsers. It should be appreciated that by running the application independently of the browser, the user can even shut down the browser without affecting the behavior of the application.

The method, in one embodiment, utilizes the Java virtual machine of the operating system on the user's computer system rather than the virtual machine of the web browser. As the virtual machines of a user's operating system are more robust than those of a browser, running the application becomes more standardized as does any output from the application. While some of the embodiments described below are described in reference to an application for a printer, this is not meant to be limiting in any way. The application can be any Java based network application. Such network applications are commonly provided by Application service Providers (ASP) to enable wide access of an application over a network, such as the Internet.

In one embodiment, the system uses an ActiveX control module to install and launch network Java applications for Internet Explorer™ on Windows™. In another embodiment, a Netscape™ Plugin control module can be used for Netscape on Windows™. In yet another embodiment, each of these modules is preferably digitally signed using an X 509 certificate security so that the browser will trust the installer/launcher module. In this manner, each of these different types of modules is enabled to install the necessary components or modules of the application from the server (located on the network) to the client i.e., the local computer, and then properly launch the network application. In one embodiment of the invention, the modules will send application parameters, which may affect the behavior of the application, from the browser to the application via a TCP/IP communication socket. Still further, the modules can also receive information about the status of the executing application at the client via the TCP/IP communication socket.

In one embodiment, a one-time download of a large application is not required to enable network launching of the application, nor is the user required to restart his or her browser in order to launch the application. In another embodiment, the system can check the version of the virtual machine on the client system to verify that it is a supported version in addition to checking the version of the installed components to see if they are up-to-date (e.g., current version). It should be appreciated that this improves performance over the network by minimizing the number of costly component downloads while ensuring that the client has the most up-to-date components available from the server. As mentioned above, the system also has the ability to pass parameters chosen by the user in the web browser to the application via TCP/IP communication. This feature is especially useful because of the dynamic nature of web pages enabled by technology such as CGI, Java Servlet ™ and Java Server Pages™ (JSP). Moreover, in one embodiment the Java 2 virtual machine is not required to be installed on the client's system since Java 1.1 with Microsoft's Internet Explorer™ 4.5 or higher. Additionally, the increased functionality of the Java 2 virtual machine is not required for the present invention as opposed to other application deployment technology.

The system and method installs application components, such as native library files and archives containing Java class files (which contain the Java byte codes) stored on the server, onto the client machine in one embodiment. When a new version of the application is developed and released, the server is updated with the new components, therefore, when the system checks for the latest version on a client the new version will be downloaded, otherwise no additional downloads are needed. The embodiments of the invention allow for seamless cross-browser and cross-virtual machine execution overcoming the limitations of the prior art.

In particular, with respect to an application for a printer, greater control is gained over the printing behavior of network programs. For example, a vendor's web site can provide access to an image editing application that can be downloaded and installed on a client from the vendor's server. The output performance from printers, such as color, resolution, margins, text, etc. are standardized by the elimination of printing through an applet and implementing a Java printing application running outside the browser. In one embodiment, when the application prints, a printing class accesses a native library for each platform. As mentioned above, while reference is made to an application for a printer, any network application can be employed in the method and system described herein.

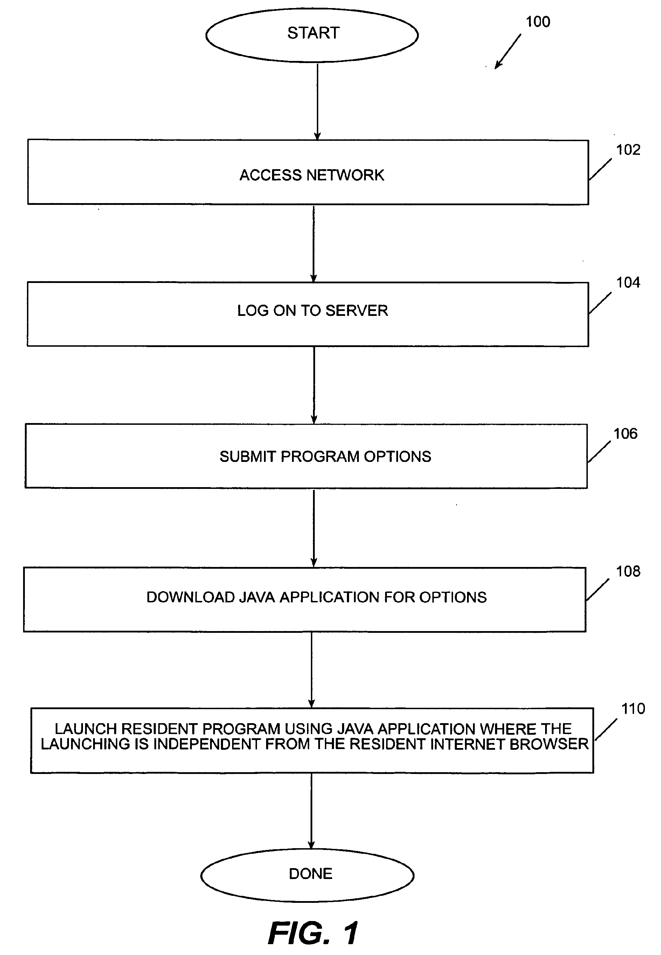

Figure 1 illustrates flowchart 100 displaying an overview of the method for installing and launching a network application in accordance with one embodiment of the invention. Flowchart 100 initiates with operation 102 where a network is accessed by a user. In one embodiment the network is the Internet. Then, in operation 104 the user logs on to a server containing the network application. In one embodiment, a password is required to access the server. Next, in operation 106 the user submits program options. In one embodiment, with reference to an application for a printer, the user may be presented options for creating greeting cards, creating business cards, creating a slide show presentation, etc. In another embodiment, the server checks the client to determine if the client has the options and if the options are the most recent versions. The method advances to operation 108 where the Java application for the options chosen by the user are downloaded to the user's computer from the server. As used herein, the server can be any computer connected to a network and having associated storage or access to storage. The network can be either a private network or the Internet. Next, in operation 110 the resident program on the user's computer is launched using the Java application, thereby allowing the user full functionality of the chosen options. It should be appreciated that the launching of the program is independent from the resident Internet browser on the user's computer.

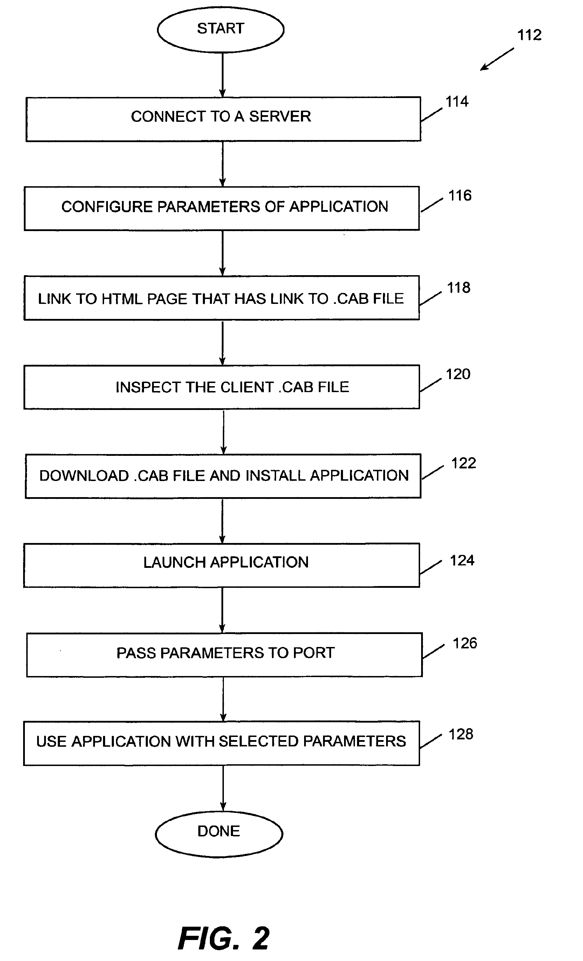

Figure 2 illustrates flowchart 112 displaying a more detailed description of a method for running a network program on a client as a stand alone Java application in accordance with one embodiment of the invention. Flowchart 112 initiates with operation 114 where a user connects to a server. Here, the user connects to the server over a network such as the Internet. In one embodiment, the connection to the server is a secure connection. Next, the method proceeds to operation 116 where parameters of the application are configured. It should be appreciated that network applications have a variety of options or parameters to choose from or configure. In the case of an application for a printer, the options or parameters can include creating greeting cards, creating business cards, creating a slide show presentation, etc. Again, as mentioned above the application for a printer is used as an illustrative example and not meant to be limiting as any application capable of including options or parameters can be used here. In another embodiment, the parameters are configured as contents of a hypertext mark-up language (HTML) page or values that are stored on the server.

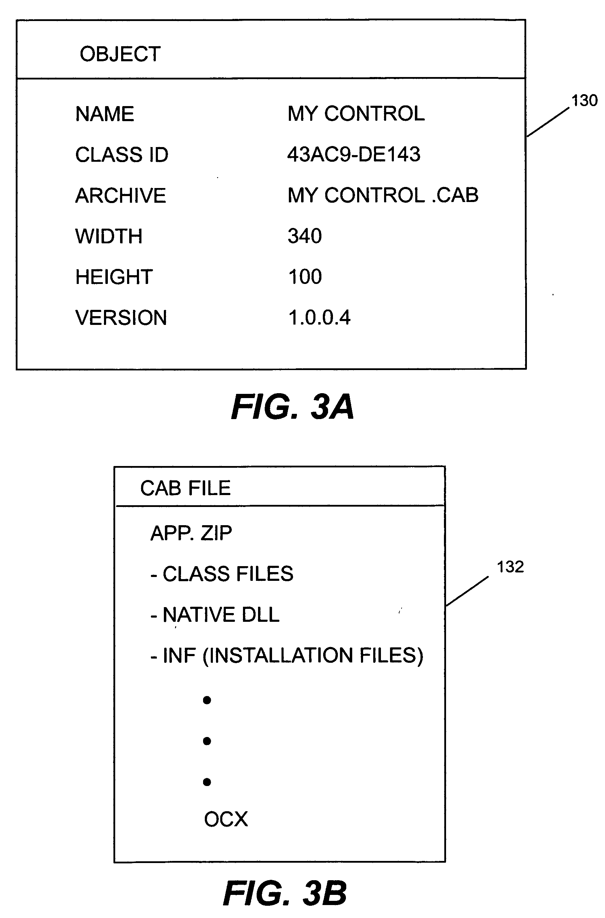

Continuing with Figure 2, the method moves to operation 118 where the server has links to a HTML page that has a link to an archive file such as a .cab file. Cab files are well known if the art to be files containing compressed data. In one embodiment, the HTML page contains the version information of the .cab file. It should be appreciated that the .cab file here is the most recent version. In one embodiment, the browser checks to see if it is necessary to download the .cab file if the .cab file of the client is not present or not the most current version as will be explained below. Moving to Figure 3A, a diagram illustrating an example of an object in an HTML page is provided in accordance with one embodiment of the invention. In one embodiment, the object of the HTML page, linked to by the server includes the information as displayed in diagram 130. Here, the name of the .cab file, the class ID of the .cab file and the archive location of the .cab file are included. In one embodiment, the width and height are for a window where the launching/installing of the ActiveX control will be appear on the web page. Also included in diagram 130 is the version information of the ActiveX control, that is of the most recent .cab file containing the application.

Figure 3B illustrates an exemplary diagram of the contents of a .cab file in accordance with one embodiment of the invention. In one embodiment, the .cab file is an archive file containing several files (which may or may not be compressed). In the exemplary diagram of Figure 3B, the .cab file contains a zip file of the Java application which is used to replace the Java applet of the prior art. In one embodiment, the zip file of the application contains all of the class files, native dynamic link libraries (DLL), and INF files. In another embodiment, the INF files are installation files listing all of the items in the .cab file and their associated versions. More specifically, the INF file tabulates the various files of the Java application such as the version of the native DLL's and other files. In addition the INF files includes the launcher application such as an object linking and embedding custom control (OCX) control. In one embodiment where the web browser is Internet Explorer™, the OCX is ActiveX.

It should be appreciated that where a user is accessing the Java application contained on the server for the first time, the location for the cab file, Mycontrol.cab, is checked and it is determined that the .cab file is not present. Therefore, the most current version of the .cab file is downloaded from the server and installed as will be explained in more detail below. It should be appreciated that the client is enabled to open the .cab file. Furthermore, the INF file contains code identifying where the different files of the .cab file are stored on the client once the client installs the .cab file. For example, the zip file and native DLL files are stored in a system folder of the client in one embodiment. In another embodiment, the OCX, which is another library containing the Java application, is installed in the appropriate location. Here, the OCX contains a .main function which loads a WINDOWS™ application in a window inside a web page of the browser. In one embodiment, the window application inside the web page is enabled to use the Java application in order to allow the user access to the functionality of the Java application. Where the user has previously used the .cab file for the Java application, the version information of the current version from the server .cab file compared to the version information of the .cab file on the client. If the versions are different, then the .cab file on the client is removed and replaced with the most recent version of the .cab file from the server in one embodiment. The use of the .cab file here is for illustrative purposes and not meant to be limiting as the .cab file can be any archive file.

Returning to Figure 2, once the version information of the .cab file on the server is determined in operation 118, the method proceeds to operation 120 where the client .cab file is inspected to determine if a .cab file is present and the most recent version. It should be appreciated, that .cab files are stored in known locations, therefore, it can easily be determined if a .cab file is present and up to date on the client. The method then advances to operation 122 where the .cab file from the server is downloaded and installed if the client does not have the most recent version or the version is not up to date. If the version of the .cab file is up to date, then there is no need to download and install the .cab file. It should be appreciated that where a Java applet is used, the applet program must be downloaded and installed each time the particular application is accessed. The method then moves to operation 124 where the application is launched. Since the .cab file containing the application is resident of the client's system, the application is run from the client's system.

The method of flowchart 112 then advances to operation 126 where the parameters are passed through a transmission control protocol/Internet protocol (TCP/IP) port which the Java application is listening to. The parameters or options chosen in operation 116 are passed through the port here to the application. It should be appreciated that once the Java application is launched and running the web browser application is also running to pass the parameters to the Java application through the TCP/IP port. For example, where the web browser is Internet Explorer™, the ActiveX control module will pass the parameters through the port to which the Java application is listening. It should be appreciated that while Internet Explorer™ and the ActiveX control module for Internet Explorer™ are used for this example, the invention is not limited to this embodiment. Any web browser and an associated control module within the browser is capable of being utilized in this operation. In one embodiment, a window of the web browser is used for the Java application, however, once all the parameters are passed to the Java application the Java application is configured to run as a stand alone application i.e., even is the web browser is closed. In another embodiment, the TCP/IP port is a socket with an IP address. Each IP address has more than 65,535 ports available where data can be sent through or received from. The port number can be any port number, as long as it is available. The passing of the parameters to the port by the browser's control module is performed each time a user attempts to launch the application, whether it is their first use of the Java application or not, in accordance with one embodiment of the invention.

Continuing with flowchart 112, the method proceeds to operation 128 where the application is now ready to be executed by the user with the selected parameters. It should be appreciated that the use of the TCP/IP port to launch the application, pass the parameters between applications, and transfer the parameters from a HTML page enables the implementation of a Java application rather than a Java applet. Additionally, when the Java application is being executed by the user, the native libraries installed through the archive file, discussed with respect to Figures 3A and 3B, standardizes the output of the Java application since the files from the archive file, that is the .cab file, are used by the Java application rather than the libraries of the web browser. Therefore, a vendor can exercise greater control over the quality of the Java application by regulating which libraries and DLL's are used. Similarly, the use of the Java virtual machine of the operating system, rather than the web browser's virtual machine, standardizes the execution of the Java application across platforms.

Since an application is being run through a control module, such as an ActiveX control, the control module is configured so that it can be digitally signed, thereby allowing for a secure operating environment for the execution of the application. As mentioned above, ActiveX is only one example of a control module for WINDOWS Internet Explorer™. Other control modules can be used with other operating systems an other web browsers. In one embodiment, the user will acknowledge the installation of the control module through a dialog box. In another embodiment, public key cryptography is employed for the installation of the control module, thereby eliminating the need to digitally sign an applet each time it is downloaded to the client.

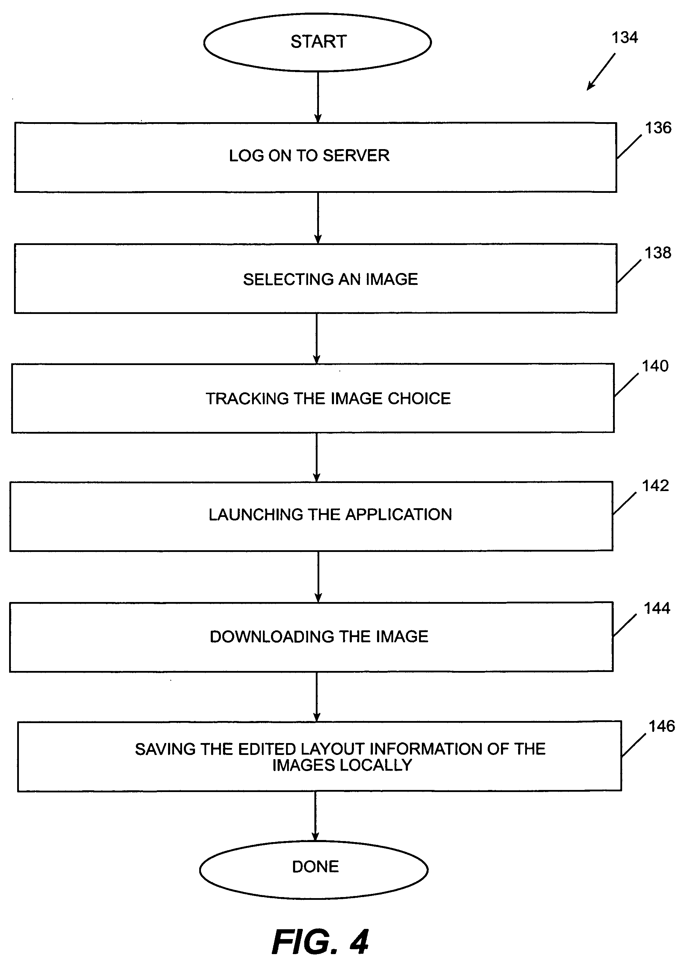

Figure 4 illustrates flowchart 134 representing a method for launching and installing a networked application where the application is geared toward editing an image in accordance with one embodiment of the invention. Flowchart 134 initiates with operation 136 where a user logs on to a server. In one embodiment, the images are maintained on the server. For example a vendor's web site provides access to a Java application for printing or editing images. Next, in operation 138 an image is selected. For example, the image from the vendor's web site can include joint photographic experts group (JPEG), graphic interchange format (GIF), bitmap BMP and windows meta files (WMF) etc. Then, in operation 140 the image choice is tracked. Here, a program keeps track of what images are selected each time the user selects an image from the server. In one embodiment, the program deletes any locally saved images that are not selected a predetermined number of times in succession. In another embodiment, the locally saved images are given a time stamp and deleted after a predetermined time period. The method proceeds to operation 142 where the application is launched. The method advances to operation 144 where the selected image is downloaded. In one embodiment, the images downloaded for editing are of a lower resolution than the images required for printing.

The method of Figure 4 proceeds to operation 146 where the edited layout information of the image is saved locally on the user's system. When the user logs on to the server to once again start the application, the image selections are locally available for the user. If any of the locally available images have been updated since the last access by the user, the newly edited image is downloaded. As mentioned above with respect to Figures 1 and 2, the client's archive files are inspected to determine if the image is the most current version in one embodiment. It should be appreciated that the Java application i.e., collection of images for the above example, can be made locally available to the user by providing a storage medium containing the application code, such as a compact disc, to the user. However, the user will still log on to the server to launch the application as discussed with respect to operation 126 of Figure 2. The process of logging on to the server each time the application is launched allows the user to obtain the most recent version of the images, resident programs library files, plug-ins, etc.

The above described invention may be practiced with other computer system configurations including hand-held devices, microprocessor systems, microprocessor-based or programmable consumer electronics, minicomputers, mainframe computers and the like. The invention may also be practiced in distributing computing environments where tasks are performed by remote processing devices that are linked through a communications network.

With the above embodiments in mind, it should be understood that the invention may employ various computer-implemented operations involving data stored in computer systems. These operations are those requiring physical manipulation of physical quantities. Usually, though not necessarily, these quantities take the form of electrical or magnetic signals capable of being stored, transferred, combined, compared, and' otherwise manipulated. Further, the manipulations performed are often referred to in terms, such as producing, identifying, determining, or comparing.

Any of the operations described herein that form part of the invention are useful machine operations. The invention also relates to a device or an apparatus for performing these operations. The apparatus may be specially constructed for the required purposes, or it may be a general purpose computer selectively activated or configured by a computer program stored in the computer. In particular, various general purpose machines may be used with computer programs written in accordance with the teachings herein, or it may be more convenient to construct a more specialized apparatus to perform the required operations.

The invention can also be embodied as computer readable code on a computer readable medium. The computer readable medium is any data storage device that can store data which can be thereafter be read by a computer system. Examples of the computer readable medium include hard drives, network attached storage (NAS), read-only memory, random-access memory, CD-ROMs, CD-Rs, CD-RWs, magnetic tapes, and other optical and non-optical data storage devices. The computer readable medium can also be distributed over a network coupled computer systems so that the computer readable code is stored and executed in a distributed fashion.

Although the foregoing invention has been described in some detail for purposes of clarity of understanding, it will be apparent that certain changes and modifications may be practiced within the scope of the appended claims. Accordingly, the present embodiments are to be considered as illustrative and not restrictive, and the invention is not to be limited to the details given herein, but may be modified within the scope and equivalents of the appended claims.

## Claims

1. A method for installing and launching a network application, through a distributed network, the application contained on a server, the method comprising:
accessing the server through the network;
selecting parameters of the application;
determining if the latest version of the application is present on a client;
downloading and installing an archive file containing the latest version of the application if the latest version of the application is not present on the client;
launching the application; and
passing parameters to a port, the port in communication with the application, wherein the application is configured to access native libraries of the archive file.

2. The method as recited in claim 1, wherein passing parameters to a port further includes:
configuring the application to listen to the port; and
sending the parameters over the port, the parameters being sent by a control module.

3. The method as recited in claim 2, wherein the port is a TCP/IP port.

4. The method as recited in claim 1, wherein the application is a Java application, the Java application configured to be executed by a Java virtual machine of an operating system of the client.

5. The method as recited in claim 1, wherein the archive file is a .cab file, the .cab file including the application and a control module.

6. The method as recited in claim 5, wherein the application is a Java application and the .cab file includes native libraries, the native libraries configured to standardize an output of the Java application across platforms.

7. The method as recited in claim 1, wherein selecting parameters of the application further includes:
linking to an HTML page the HTML page including an object containing version information of an archive file.

8. The method as recited in claim 7, wherein the object includes the width and height of a window of a web browser where the application appears.

9. A method for running a network program on a client, the network program accessed through a web browser, the method comprising:
accessing the server containing the network program;
configuring parameters of the application;
linking to a page on the server, the page containing version information of a server archive file;
determining if a client archive file is present on the client, the determining further including;
inspecting the client archive file if the client archive file is present to ascertain if the client archive file is the same version as the server archive file; and
downloading the server archive file to the client if the client archive file is not present or if the client archive file is not the same version as the server archive file; and
launching the program.

10. The method as recited in claim 9, wherein the network program is a Java based program for a printing application.

11. The method as recited in claim 9 further including:
passing the parameters to a port;
executing the application, the executing further including,
accessing native libraries, the native libraries installed by the archive file.

12. The method as recited in claim 11, wherein the port is a TCP/IP port and the application is configured to listen to the TCP/IP port so that the application can receive the parameters passed to the port.

13. The method as recited in claim 9, wherein the archive file is a .cab file, the .cab file containing a control module, the control module configured to pass the parameters to a port.

14. The method as recited in claim 13, wherein the control module is further configured to be digitally signed.

15. A system for installing and launching an application through a network, the system comprising:
a server, the server including an application contained in a server archive file, the application including a plurality of options, the server configured to link to a page containing version information of the server archive file, the server further configured to allow a user to select the options of the application;
a web browser, and
a client, the client in communication with the server through the web browser, the client inspected by the server to determine if a client archive file is present and current by comparing the version information of the server archive file with version information of the client archive file, wherein if the client archive file is not present or not current, the server archive file is downloaded to the client, the client archive file including the application, the application further configured to listen to a port such that any of the options selected by a user are transmitted to the application by a control module through the port.

16. The system as recited in claim 15, wherein the client and server archive files are .cab files, the .cab files including .INF files, the .INF files including a launcher application containing the control module.

17. The system as recited in claim 15, wherein the application is a Java application containing printing functionality.

18. The system as recited in claim 17, wherein the Java application uses a Java virtual machine of an operating system of the client.

19. The system as recited in claim 17, wherein the printing functionality is regulated by native libraries, the native libraries included in the client archive file.

20. A computer readable media containing program instructions for installing and launching a network application, through a distributed network, the application contained on a server, the computer readable media comprising:
program instructions for accessing the server through the network;
program instructions for selecting parameters of the application;
program instructions for determining if the latest version of the application is present on a client;
program instructions for downloading and installing an archive file containing the latest version of the application if the latest version of the application is not present on the client;
program instructions for launching the application; and
program instructions for passing parameters to a port, the port in communication with the application, wherein the application is configured to access native libraries of the archive file.

21. The computer readable media as recited in claim 20, wherein the program instructions for passing parameters to a port further includes:
program instructions for configuring the application to listen to the port; and
program instructions for sending the parameters over the port, the parameters being sent by a control module.

22. The computer readable media as recited in claim 20, wherein the port is a TCP/IP port.

23. The computer readable media as recited in claim 20, wherein the application is a Java application, the Java application configured to be executed by a Java virtual machine of an operating system of the client.

24. The computer readable media as recited in claim 20, wherein the program instructions for selecting parameters of the application further includes:
program instructions for linking to an HTML page the HTML page including an object containing version information of an archive file.
